# EUROPÄISCHE PATENTANMELDUNG

(11) **EP 3 968 192 A1**
(43) Veröffentlichungstag der Anmeldung: **16.03.2022**
(21) Anmeldenummer: 21196362.4
(22) Anmeldetag: 13.09.2021
(51) Int. Cl.: G06F 21/31, G06Q 30/06

(54) **VERFAHREN UND CLIENT-SERVER-SYSTEM ZUR NUTZUNG EINES ELEKTROWERKZEUGS**

(30) Priorität: 14.09.2020 DE 102020123844
(71) Anmelder: Einhell Germany AG, 94405 Landau / Isar (DE)
(72) Erfinder: Dr. THANNHUBER, Markus, 94405 Landau (DE)
(74) Vertreter: Hofstetter, Schurack & Partner

(57) **Zusammenfassung**

Gemäß einem Verfahren zur Nutzung eines Elektrowerkzeugs (1) werden Geräteidentifikationsdaten des Elektrowerkzeugs (1) nach der Authentifizierung eines ersten Benutzers erfasst und abhängig davon erste Geräteinformationen an eine Serverrecheneinheit (4) übermittelt. Nach der Authentifizierung eines zweiten Benutzers werden die Geräteidentifikationsdaten erneut erfasst und erneut an die Serverrecheneinheit (4) übermittelt. Mittels der Serverrecheneinheit (4) werden Übergabeinformationen abhängig von den übermittelten Geräteidentifikationsdaten und Benutzeridentifikationsdaten aus den Authentifizierungen erzeugt und gespeichert.

## Beschreibung

Die vorliegende Erfindung betrifft ein Verfahren zur Nutzung eines Elektrowerkzeugs sowie ein Client-Server-System zur Unterstützung der Nutzung eines Elektrowerkzeugs.

Benutzer von Elektrowerkzeugen stehen häufig vor der Situation, dass sie ein bestimmtes Werkzeug für eine spezielle Tätigkeit benötigen, welches sie jedoch nicht selbst besitzen und in der näheren Zukunft voraussichtlich auch nur ein einziges Mal oder wenige Male benötigen werden. Das führt dazu, dass entsprechende Werkzeuge gekauft, jedoch nur selten verwendet werden. Sowohl im Heimwerkerbereich als auch im professionellen Bereich tritt diese Problematik auf.

Um dieser Situation Rechnung zu tragen, können Plattformen etabliert werden, auf denen Benutzer in ihrem Eigentum befindliche Elektrowerkzeuge zur Verfügung stellen und andere Benutzer die Elektrowerkzeuge leihen oder mieten können. Ein entscheidender Aspekt bei solchen Plattformen ist der Schutz des Privateigentums des bereitstellenden Benutzers, also insbesondere der Schutz vor Diebstahl, unsachgemäßer Verwendung oder Beschädigung des Elektrowerkzeugs durch den Leiher oder Mieter.

Ein weiterer Nachteil ist, dass der Benutzer, der ein Elektrowerkzeug leihen oder mieten möchte, dieses am Gerätestandort abholen muss, was einen entsprechenden zeitlichen Aufwand mit sich bringt.

Vor diesem Hintergrund ist es eine Aufgabe der vorliegenden Erfindung, ein verbessertes Konzept zur Unterstützung der Nutzung von Elektrowerkzeugen anzugeben, das den Schutz des Eigentums an dem Elektrowerkzeug erleichtert.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Gemäß einem ersten Aspekt des verbesserten Konzepts wird ein Verfahren zur Nutzung eines Elektrowerkzeugs angegeben. Ein erster Benutzer wird dabei, insbesondere mittels eines ersten elektronischen Endgeräts, authentifiziert, um erste Benutzeridentifikationsdaten zu bestimmen. Zu einem ersten Zeitpunkt nach der Authentifizierung des ersten Benutzers werden Geräteidentifikationsdaten des Elektrowerkzeugs mittels eines ersten Sensorsystems des ersten elektronischen Endgeräts erfasst. Erste Geräteinformationen, die von den zum ersten Zeitpunkt erfassten Geräteidentifikationsdaten abhängen oder abhängig von diesen erzeugt werden, insbesondere mittels des ersten elektronischen Endgeräts, werden, insbesondere mittels des ersten elektronischen Endgeräts, an eine Serverrecheneinheit übermittelt, wobei die Serverrecheneinheit beispielsweise eine Cloud-Recheneinheit sein kann. Ein zweiter Benutzer wird, insbesondere mittels des ersten elektronischen Endgeräts oder mittels eines zweiten elektronischen Endgeräts, authentifiziert, um zweite Benutzeridentifikationsdaten zu bestimmen. Zu einem zweiten Zeitpunkt nach der Authentifizierung des zweiten Benutzers werden die Geräteidentifikationsdaten des Elektrowerkzeugs mittels des ersten Sensorsystems oder mittels eines zweiten Sensorsystems des zweiten elektronischen Endgeräts erfasst. Zweite Geräteinformationen, die von den zum zweiten Zeitpunkt erfassten Geräteidentifikationsdaten abhängen oder abhängig von diesen erzeugt werden, insbesondere mittels des ersten beziehungsweise des zweiten elektronischen Endgeräts, werden, insbesondere mittels des ersten oder des zweiten elektronischen Endgeräts, an die Serverrecheneinheit übermittelt. Mittels der Serverrecheneinheit werden Übergabeinformationen abhängig von den ersten Geräteinformationen, den zweiten Geräteinformationen, den ersten Benutzeridentifikationsdaten und den zweiten Benutzeridentifikationsdaten erzeugt und gespeichert, insbesondere auf einem Speicherelement, beispielsweise der Serverrecheneinheit.

Im Folgenden wird mitunter davon ausgegangen, dass bestimmte Schritte, wie beispielsweise die Authentifizierung des zweiten Benutzers beziehungsweise das Erfassen der Geräteidentifikationsdaten zum zweiten Zeitpunkt und das Übermitteln der zweiten Geräteinformationen an die Serverrecheneinheit, mittels des zweiten elektronischen Geräts durchgeführt werden. In jeweiligen alternativen Ausführungsformen lassen sich einige oder alle dieser Schritte stattdessen durch das erste elektronische Endgerät durchführen. Es ist auch denkbar, dass eine Vielzahl von elektronischen Endgeräten einzelne Schritte des ersten und/oder des zweiten elektronischen Endgeräts übernehmen.

Zum Authentifizieren des ersten Benutzers beziehungsweise des zweiten Benutzers kann das jeweilige elektronische Endgerät, insbesondere gemäß einem vorgegebenen Authentifizierungsprotokoll, Schlüssel oder sonstige Daten mit der Serverrecheneinheit austauschen, um die Authentifizierung durchzuführen. Die Authentifizierung wird also jeweils mittels des entsprechenden Endgeräts und der Serverrecheneinheit durchgeführt. Dementsprechend können die Benutzeridentifikationsdaten nach Abschluss der Authentifizierung dem jeweiligen elektronischen Endgerät und/oder der Serverrecheneinheit vorliegen. Liegen die jeweiligen Benutzeridentifikationsdaten der Serverrecheneinheit unmittelbar nach Durchführung der Authentifizierung nicht vor, so können diese durch das elektronische Endgerät an die Serverrecheneinheit übermittelt werden.

Die Authentifizierung des ersten beziehungsweise des zweiten Benutzers kann beispielsweise zum Anmelden des jeweiligen Benutzers bei einem Benutzerkonto, welches beispielsweise personenbezogene Daten wie etwa Name und Anschrift des jeweiligen Benutzers speichert, erfolgen.

Die Geräteidentifikationsdaten erlauben, jedenfalls innerhalb einer vorgegebenen Vielzahl von Elektrowerkzeugen, die eindeutige Identifikation des Elektrowerkzeugs. Die Geräteidentifikationsdaten können also beispielsweise Seriennummern oder dergleichen des jeweiligen Elektrowerkzeugs beinhalten. Die Geräteinformationen können die erfassten Geräteidentifikationsdaten jeweils beinhalten oder abhängig von den Geräteidentifikationsdaten erzeugte Daten beinhalten.

Die Authentifizierung des jeweiligen Benutzers wird beispielsweise mittels desselben elektronischen Endgeräts durchgeführt wie die nachfolgende Erfassung der Geräteidentifikationsdaten. Insbesondere wird also der erste Benutzer mittels des ersten elektronischen Endgeräts authentifiziert und der zweite Benutzer wird, je nachdem, ob die Geräteidentifikationsdaten zum zweiten Zeitpunkt mittels des ersten oder mittels des zweiten Sensorsystems erfasst werden, mittels des ersten elektronischen Endgeräts beziehungsweise mittels des zweiten elektronischen Endgeräts authentifiziert. Dadurch kann mit höherer Wahrscheinlichkeit davon ausgegangen werden, dass die zur jeweiligen Authentifizierung erforderlichen Eingaben und die Erfassung der entsprechenden Geräteidentifikationsdaten durch denselben Benutzer beziehungsweise die im Einverständnis mit diesem durchgeführt werden, um so die Zuverlässigkeit beziehungsweise Sicherheit zu gewährleisten.

Während der erste Zeitpunkt nach der Authentifizierung des ersten Benutzers liegt und der zweite Zeitpunkt nach der Authentifizierung des zweiten Benutzers, ist die Reihenfolge des ersten Zeitpunkts und des zweiten Zeitpunkts bezüglich einander beliebig.

Indem die Serverrecheneinheit die Übergabeinformationen erzeugt und speichert, insbesondere unabhängig von den elektronischen Endgeräten, kann die Übergabe beziehungsweise der Gefahrenübergang des Elektrowerkzeugs von dem ersten Benutzer an den zweiten Benutzer sicher dokumentiert werden. Insbesondere können die Übergabeinformationen den Inhalt der ersten beziehungsweise zweiten Geräteinformationen, der im Regelfall gleich sein sollte, mit den ersten und den zweiten Benutzeridentifikationen verknüpfen, um die Übergabe beziehungsweise den Gefahrenübergang zu dokumentieren. Zusätzlich können die Übergabeinformationen auch weitere Informationen zur Dokumentation oder Plausibilitätsprüfung beinhalten, beispielsweise jeweilige Zeitangaben der Authentifizierungen beziehungsweise betreffend den ersten und/oder den zweiten Zeitpunkt oder Standortinformationen der elektronischen Endgeräte zu den entsprechenden Zeitpunkten.

Gemäß zumindest einer Ausführungsform des Verfahrens nach dem verbesserten Konzept werden die ersten Geräteinformationen und die zweiten Geräteinformationen mittels der Serverrecheneinheit miteinander verglichen und die Übergabeinformationen werden mittels der Serverrecheneinheit abhängig von einem Ergebnis des Vergleichs erzeugt.

Beispielsweise werden die Übergabeinformationen mittels der Serverrecheneinheit nur dann erzeugt und gespeichert, wenn die ersten Geräteinformationen mit den zweiten Geräteinformationen übereinstimmen beziehungsweise identische Geräteidentifikationsdaten spezifizieren. Dadurch kann sichergestellt werden, dass zum ersten Zeitpunkt und zum zweiten Zeitpunkt dasselbe Elektrowerkzeug zum Erfassen der Geräteidentifikationsdaten vorlag. Die Sicherheit der Dokumentation des Gefahrenübergangs beziehungsweise der Übergabe wird dadurch erhöht.

Gemäß zumindest einer Ausführungsform werden die Geräteidentifikationsdaten zum ersten Zeitpunkt mittels einer ersten Kamera des ersten Sensorsystems erfasst und die Geräteidentifikationsdaten werden zum zweiten Zeitpunkt mittels der ersten Kamera oder mittels einer zweiten Kamera des zweiten Sensorsystems erfasst.

Bei den elektronischen Endgeräten kann es sich insbesondere um Mobiltelefone, Smartphones, Tabletcomputer, Notebookcomputer oder dergleichen handeln. Alternativ können auch spezielle Scanner vorgesehen sein, die die Authentifizierung der jeweiligen Benutzer ermöglichen und das jeweilige Sensorsystem beinhalten.

Durch die Verwendung von Kameras zum Erfassen der Geräteidentifikationsdaten können diese auf dem Elektrowerkzeug visuell dargestellt werden und daher einfach angebracht und gegebenenfalls bei Bedarf entfernt werden.

Gemäß zumindest einer Ausführungsform werden die Geräteidentifikationsdaten zum ersten Zeitpunkt und/oder zum zweiten Zeitpunkt in Form eines jeweiligen zweidimensionalen Datenmatrixcodes oder eines Strichcodes erfasst, insbesondere mittels der jeweiligen Kamera.

Anhand der zweidimensionalen Datenmatrixcodes, die auch als Quick Response, QR-Codes, bezeichnet werden können, können die Geräteidentifikationsdaten zum einen eine große Datenmenge beinhalten, außerdem kann dadurch auch eine hohe Fehlertoleranz beim Erfassen der Geräteidentifikationsdaten erreicht werden.

Gemäß zumindest einer Ausführungsform werden die Geräteidentifikationsdaten zum ersten Zeitpunkt mittels einer ersten RFID-Schnittstelle des ersten Sensorsystems erfasst und/oder die Geräteidentifikationsdaten werden zum zweiten Zeitpunkt mittels der ersten RFID-Schnittstelle oder mittels einer zweiten RFID-Schnittstelle des zweiten Sensorsystems erfasst.

Bei den RFID-Schnittstellen handelt es sich insbesondere um RFID-Leseeinheiten oder NFC-Leseeinheiten in Form entsprechender integrierter Schaltkreise. Dementsprechend enthält das Elektrowerkzeug einen entsprechenden RFID-Transponder oder NFC-Transponder, der die Geräteidentifikationsdaten speichert. Dadurch kann eine manipulationssichere Speicherung der Geräteidentifikationsdaten ermöglicht werden.

Gemäß zumindest einer Ausführungsform werden die Geräteidentifikationsdaten zum ersten Zeitpunkt mittels einer WIFI-Schnittstelle, einer Bluetooth-Schnittstelle oder einer sonstigen Funkschnittstelle des ersten Sensorsystems erfasst. Die Geräteidentifikationsdaten werden zum zweiten Zeitpunkt mittels einer WIFI-Schnittstelle, einer Bluetooth-Schnittstelle, einer Cloudlink-Schnittstelle, einer Sigi-Schnittstelle oder einer weiteren Funkschnittstelle des zweiten Sensorsystems oder des ersten Sensorsystems erfasst.

Gemäß zumindest einer Ausführungsform wird der zweite Benutzer, insbesondere mittels des ersten oder des zweiten elektronischen Endgeräts, erneut authentifiziert, um erneut die zweiten Benutzeridentifikationsdaten zu bestimmen. Zu einem dritten Zeitpunkt, der insbesondere nach dem ersten Zeitpunkt und nach dem zweiten Zeitpunkt liegt, nach der erneuten Authentifizierung des zweiten Benutzers werden die Geräteidentifikationsdaten des Elektrowerkzeugs mittels des ersten Sensorsystems oder mittels des zweiten Sensorsystems erfasst. Dritte Geräteinformationen, die von dem zum dritten Zeitpunkt erfassten Geräteidentifikationsdaten abhängen, werden, insbesondere mittels des ersten elektronischen Endgeräts oder des zweiten elektronischen Endgeräts, an die Serverrecheneinheit übermittelt. Der erste Benutzer wird, insbesondere mittels des ersten elektronischen Endgeräts, erneut authentifiziert, um erneut die ersten Benutzeridentifikationsdaten zu bestimmen. Zu einem vierten Zeitpunkt, der insbesondere nach dem ersten Zeitpunkt und nach dem zweiten Zeitpunkt liegt, nach der erneuten Authentifizierung des ersten Benutzers werden die Geräteidentifikationsdaten des Elektrowerkzeugs mittels des ersten Sensorsystems erfasst. Vierte Geräteinformationen, die von den zum vierten Zeitpunkt erfassten Geräteidentifikationsdaten abhängen, werden, insbesondere mittels des ersten elektronischen Endgeräts, an die Serverrecheneinheit übermittelt. Mittels der Serverrecheneinheit werden Rückgabeinformationen abhängig von den dritten Geräteinformationen und den vierten Geräteinformationen erzeugt und gespeichert.

Die Rückgabeinformationen dokumentieren dabei, analog zu den Übergabeinformationen, den erneuten Gefahrenübergang beziehungsweise die erneute Übergabe des Elektrowerkzeugs, nun jedoch von dem zweiten Benutzer zurück an den ersten Benutzer. Dadurch kann insbesondere sicher dokumentiert werden, dass beziehungsweise wann der zweite Benutzer das Elektrowerkzeug zurückgegeben hat.

Gemäß zumindest einer Ausführungsform wird automatisch, beispielsweise mittels der Serverrecheneinheit und/oder wenigstens einem der elektronischen Endgeräte, ein Zeitraum bestimmt, der seit dem ersten Zeitpunkt oder seit dem zweiten Zeitpunkt vergangen ist und der Zeitraum wird mit einem vorgegebenen Grenzwert verglichen. Mittels des ersten elektronischen Endgeräts und/oder mittels des zweiten elektronischen Endgeräts wird abhängig von einem Ergebnis des Vergleichs des Zeitraums mit dem vorgegebenen Grenzwert ein Warnhinweis erzeugt und ausgegeben.

Die Ausgabe kann dabei visuell erfolgen, beispielsweise mittels einer Anzeigeeinheit des jeweiligen elektronischen Endgeräts und/oder akustisch. Es kann auch innerhalb einer entsprechenden Softwareapplikation, die auf dem jeweiligen Endgerät ausgeführt werden kann, eine entsprechende Nachricht hinterlegt werden, die den Warnhinweis beinhaltet.

Der Grenzwert kann dabei beispielsweise durch eine maximale Leih- oder Mietdauer definiert sein. Der Grenzwert kann dabei gleich oder kleiner der maximalen Leih- oder Mietdauer sein, um den jeweiligen Benutzer entsprechend frühzeitig darüber zu informieren, dass die maximale Leih- oder Mietdauer gegebenenfalls bald erreicht ist. In derselben Weise können auch zeitlich abgestuft mehrere Warnhinweise erzeugt und ausgegeben werden, um eine rechtzeitige Rückgabe sicherzustellen.

Gemäß zumindest einer Ausführungsform werden mittels des Elektrowerkzeugs Nutzungsdaten betreffend eine Nutzung des Elektrowerkzeugs nach dem ersten Zeitpunkt oder nach dem zweiten Zeitpunkt, und insbesondere bis zum dritten oder bis zum vierten Zeitpunkt, bestimmt und an die Serverrecheneinheit übermittelt.

Die Übermittlung der Nutzungsdaten kann dabei direkt durch eine Kommunikationsschnittstelle des Elektrowerkzeugs an die Serverrecheneinheit erfolgen, beispielsweise durch eine WiFi-Schnittstelle. Alternativ können die Nutzungsdaten auch mittels der Kommunikationsschnittstelle, die in diesem Fall beispielsweise als WiFi-Schnittstelle, Bluetooth-Schnittstelle, Cloudlink-Schnittstelle, Sigi-Schnittstelle oder RFID-Schnittstelle ausgestaltet sein kann, von dem Elektrowerkzeug an das erste oder das zweite elektronische Endgerät übermittelt und von dem entsprechenden elektronischen Endgerät an die Serverrecheneinheit weitergeleitet werden. Die Serverrecheneinheit kann die Nutzungsdaten dann entsprechend speichern.

Dadurch kann dokumentiert werden, wie oder in welcher Weise, wie intensiv oder wie oft und so weiter der zweite Benutzer das Elektrowerkzeug während der Mietdauer oder Leihdauer genutzt hat. Diese Information kann zum einen zur Bestimmung einer Nutzungsentschädigung an den Eigentümer oder zur Bestimmung eines Mietpreises verwendet werden. Zum anderen können auch Versicherungsprämien abhängig von entsprechenden Nutzungsdaten festgelegt werden.

Gemäß zumindest einer Ausführungsform werden die Nutzungsdaten abhängig von einer, insbesondere nach dem ersten oder nach dem zweiten Zeitpunkt, durch das Elektrowerkzeug verbrauchten Menge an elektrischer Energie bestimmt.

Mit anderen Worten enthalten die Nutzungsdaten Daten betreffend die verbrauchte Energiemenge. Beispielsweise beinhaltet das Elektrowerkzeug einen Akku. Die verbrauchte Menge an elektrischer Energie kann dann beispielsweise durch den Akku bestimmt werden. Die Menge an verbrauchter elektrischer Energie kann mittels eines Batteriemanagementsystems des Elektrowerkzeugs, insbesondere des Akkus, bestimmt werden.

Die Berücksichtigung der Menge an verbrauchter elektrischer Energie kann insbesondere vorteilhaft sein, um eine mögliche Alterung der Akkus zu dokumentieren und/oder bei dem Mietpreis beziehungsweise der Versicherungsprämie zu berücksichtigen.

Gemäß zumindest einer Ausführungsform werden die Nutzungsdaten abhängig von einer aktiven Nutzungsdauer des Elektrowerkzeugs, insbesondere nach dem ersten Zeitpunkt oder nach dem zweiten Zeitpunkt, bestimmt.

Die aktive Nutzungsdauer kann dabei ebenfalls mittels des Batteriemanagementsystems bestimmt werden. Ebenso wie die Menge an verbrauchter elektrischer Energie kann die aktive Nutzungsdauer als Maßzahl für die Nutzungsintensität herangezogen werden.

Gemäß zumindest einer Ausführungsform werden die Nutzungsdaten abhängig von einer Anzahl von Ladezyklen des Akkus des Elektrowerkzeugs, insbesondere einer Anzahl von Ladezyklen nach dem ersten Zeitpunkt oder nach dem zweiten Zeitpunkt, bestimmt.

Auch die Anzahl von Ladezyklen kann beispielsweise mittels des Batteriemanagementsystems erfasst werden. Ebenso wie die verbrauchte Menge an elektrischer Energie oder die aktive Nutzungsdauer, kann die Anzahl von Ladezyklen dazu dienen, die Intensität der Benutzung beziehungsweise entsprechende Abnutzung oder Alterung des Elektrowerkzeugs beziehungsweise des Akkus quantifizieren.

Gemäß einem zweiten Aspekt des verbesserten Konzepts wird ein Client-Server-System zur Unterstützung der Nutzung eines Elektrowerkzeugs angegeben. Das Client-Server-System weist ein erstes elektronisches Endgerät als ersten Client auf, ein zweites elektronisches Endgerät als zweiten Client sowie eine Serverrecheneinheit. Das erste elektronische Endgerät weist eine erste Benutzerschnittstelle zum Erfassen einer ersten Benutzereingabe auf, sowie eine erste Recheneinheit, die dazu eingerichtet ist, einen ersten Benutzer abhängig von der ersten Benutzereingabe zu authentifizieren. Das erste elektronische Endgerät weist ein erstes Sensorsystem auf, das dazu eingerichtet ist, zu einem ersten Zeitpunkt nach der Authentifizierung des ersten Benutzers Geräteidentifikationsdaten des Elektrowerkzeugs zu erfassen. Die erste Recheneinheit ist dazu eingerichtet, insbesondere mittels einer ersten Kommunikationsschnittstelle des ersten elektronischen Endgeräts, von den zum ersten Zeitpunkt erfassten Geräteidentifikationsdaten abhängige erste Geräteinformationen an die Serverrecheneinheit zu übermitteln. Das zweite elektronische Endgerät weist eine zweite Benutzerschnittstelle zum Erfassen einer zweiten Benutzereingabe auf sowie eine zweite Recheneinheit, die dazu eingerichtet ist, einen zweiten Benutzer abhängig von der zweiten Benutzereingabe zu authentifizieren. Das zweite elektronische Endgerät weist ein zweites Sensorsystem auf, das dazu eingerichtet ist, zu einem zweiten Zeitpunkt nach der Authentifizierung des zweiten Benutzers die Geräteidentifikationsdaten des Elektrowerkzeugs zu erfassen. Die zweite Recheneinheit ist dazu eingerichtet, insbesondere über eine zweite Kommunikationsschnittstelle des zweiten elektronischen Endgeräts von den zum zweiten Zeitpunkt erfassten Geräteidentifikationsdaten abhängige zweite Geräteinformationen an die Serverrecheneinheit zu übermitteln. Die Serverrecheneinheit ist dazu eingerichtet, Übergabeinformationen abhängig von den ersten Geräteinformationen, den zweiten Geräteinformationen, den ersten Benutzeridentifikationsdaten und den zweiten Benutzeridentifikationsdaten zu erzeugen und, insbesondere auf ein Speicherelement des Client-Server-Systems, beispielsweise der Serverrecheneinheit, zu speichern.

Gemäß zumindest einer Ausführungsform des Client-Server-Systems nach dem verbesserten Konzept enthält das erste Sensorsystem eine erste Kamera oder eine erste RFID-Schnittstelle, eine erste Wifi-Schnittstelle, eine erste Bluetooth-Schnittstelle, eine erste Cloudlink-Schnittstelle oder eine erste Sigi-Schnittstelle und/oder das zweite Sensorsystem enthält eine zweite Kamera oder eine zweite RFID-Schnittstelle eine zweite Wifi-Schnittstelle, eine zweite Bluetooth-Schnittstelle, eine zweite Cloudlink-Schnittstelle oder eine zweite Sigi-Schnittstelle.

Gemäß zumindest einer Ausführungsform beinhaltet das Client-Server-System das Elektrowerkzeug und das Elektrowerkzeug weist ein Batteriemanagementsystem für einen Akku des Elektrowerkzeugs auf, wobei das Batteriemanagementsystem dazu eingerichtet ist, Nutzungsdaten betreffend eine Nutzung des Elektrowerkzeugs nach dem ersten Zeitpunkt oder nach dem zweiten Zeitpunkt zu bestimmen.

Das Batteriemanagementsystem kann dabei beispielsweise als Mikrocontrollereinheit oder sonstige Prozessoreinheit ausgestaltet sein und zum Erfassen der Nutzungsdaten beispielsweise Strom- und/oder Spannungssensoren, einen Temperatursensor und so weiter beinhalten. Das Batteriemanagementsystem kann dabei beispielsweise Teil des Akkus sein.

Gemäß zumindest einer Ausführungsform weist das Elektrowerkzeug eine Kommunikationsschnittstelle auf und das Batteriemanagementsystem ist dazu eingerichtet, die Nutzungsdaten über die Kommunikationsschnittstelle des Elektrowerkzeugs an die Serverrecheneinheit zu übermitteln.

In solchen Ausführungsformen ist die Kommunikationsschnittstelle insbesondere als Funkschnittstelle, beispielsweise als WiFi-Schnittstelle, ausgestaltet.

Gemäß zumindest einer Ausführungsform weist das Elektrowerkzeug die Kommunikationsschnittstelle auf und das Batteriemanagementsystem ist dazu eingerichtet, die Nutzungsdaten über die Kommunikationsschnittstelle an die erste Recheneinheit zu übermitteln. Die erste Recheneinheit ist dazu eingerichtet, die Nutzungsdaten an die Serverrecheneinheit zu übermitteln.

In solchen Ausführungsformen kann die Kommunikationsschnittstelle des Elektrowerkzeugs beispielsweise als WiFi-Schnittstelle, als Bluetooth-Schnittstelle, Cloudlink-Schnittstelle, Sigi-Schnittstelle oder als sonstige Funkschnittstelle oder als RFID-Schnittstelle beziehungsweise RFID-Transponder ausgestaltet sein.

Gemäß zumindest einer Ausführungsform weist das Elektrowerkzeug die Kommunikationsschnittstelle auf und das Batteriemanagementsystem ist dazu eingerichtet, die Nutzungsdaten über die Kommunikationsschnittstelle an die zweite Recheneinheit zu übermitteln und die zweite Recheneinheit ist dazu eingerichtet, die Nutzungsdaten an das Batteriemanagementsystem zu übermitteln.

Weitere Ausführungsformen des Client-Server-Systems nach dem zweiten Aspekt des verbesserten Konzepts ergeben sich direkt aus den verschiedenen Ausgestaltungsformen des Verfahrens nach dem ersten Aspekt des verbesserten Konzepts und umgekehrt. Insbesondere ist ein Client-Server-System nach dem verbesserten Konzept dazu eingerichtet oder programmiert, ein Verfahren nach dem verbesserten Konzept durchzuführen oder es führt ein solches Verfahren durch.

Gemäß einem dritten Aspekt des verbesserten Konzepts wird ein weiteres Client-Server-System zur Unterstützung der verteilten Nutzung von Elektrowerkzeugen angegeben. Das weitere Client-Server-System weist eine Client-Recheneinheit auf, eine Serverrecheneinheit, eine Anzeigeeinheit, insbesondere eine Anzeigeeinheit der Client-Recheneinheit, sowie ein Speicherelement, welches eine Gerätedatenbank speichert. Die Client-Recheneinheit ist dazu eingerichtet, eine Anfrage zur beabsichtigten Nutzung eines Elektrowerkzeugs zu erfassen und an die Serverrecheneinheit zu übermitteln. Die Anfrage enthält Standortdaten betreffend einen anfragenden Benutzer sowie Gerätedaten, welche einen Gerätetyp des Elektrowerkzeugs festlegen. Die Serverrecheneinheit ist dazu eingerichtet, abhängig von den Gerätedaten wenigstens ein verfügbares Exemplar des Gerätetyps in der Gerätedatenbank zu identifizieren und für jedes des wenigstens einen Exemplars zugehörige Gerätestandortdaten aus der Gerätedatenbank auszulesen. Die Serverrecheneinheit oder die Client-Recheneinheit ist dazu eingerichtet, für jedes des wenigstens einen Exemplars abhängig von den Standortdaten und abhängig von den jeweiligen Gerätestandortdaten eine zeitliche Entfernung zu berechnen. Die Client-Recheneinheit ist dazu eingerichtet, für jedes des wenigstens einen Exemplars Informationen betreffend das jeweilige Exemplar abhängig von der jeweiligen zeitlichen Entfernung auf der Anzeigeeinheit anzuzeigen.

Bei dem anfragenden Benutzer handelt es sich insbesondere um einen Benutzer, der ein Exemplar des Gerätetyps mieten oder leihen möchte. Über die Anzeige der jeweiligen zeitlichen Entfernung wird dem anfragenden Benutzer mitgeteilt, welche Zeit jeweils benötigt wird, um von dem Standort des Benutzers, spezifiziert durch die Standortdaten, zu dem Gerätestandort, spezifiziert durch die jeweiligen Gerätestandortdaten, benötigt wird.

Indem die Anzeige auf der Anzeigeeinheit abhängig von der jeweiligen zeitlichen Entfernung erfolgt, kann der anfragende Benutzer schneller erfassen, welche Exemplare des Gerätetyps sich in seiner unmittelbaren Umgebung befinden beziehungsweise welche weiter entfernt sind. Dadurch kann ein Zeitaufwand für den gesamten Leih- beziehungsweise Mietvorgang beziehungsweise die Abholung des jeweiligen Exemplars an dem Gerätestandort gemäß den Bedürfnissen des anfragenden Benutzers optimiert werden.

Die Standortinformationen sind dabei durch die Client-Recheneinheit festgelegt. Der anfragende Benutzer kann beispielsweise eine Eingabe in die Client-Recheneinheit tätigen, um seinen Standort entsprechend manuell festzulegen oder die Client-Recheneinheit kann die Standortdaten beispielsweise mittels eines GNSS-Empfängers, beispielsweise eines GPS-Empfängers, automatisch erfassen. Die Gerätestandortdaten betreffen beziehungsweise definieren den Gerätestandort des jeweiligen Exemplars.

Dass ein Exemplar des Gerätetyps verfügbar ist, kann derart verstanden werden, dass das entsprechende Exemplar als verfügbar in der Gerätedatenbank hinterlegt ist.

Die Informationen betreffend das jeweilige Exemplar, die abhängig von der jeweiligen zeitlichen Entfernung auf der Anzeigeeinheit angezeigt werden, können beispielsweise eine Abbildung oder schematische Darstellung des Exemplars, eine Bezeichnung und/oder Beschreibung des Exemplars, eine Seriennummer und/oder Typnummer des Exemplars, die jeweilige zeitliche Entfernung, den jeweiligen Gerätestandort und so weiter beinhalten. Indem diese Informationen abhängig von der jeweiligen zeitlichen Entfernung angezeigt werden, kann der anfragende Benutzer den entsprechenden Zeitaufwand einfach und schnell abschätzen.

Gemäß zumindest einer Ausführungsform des weiteren Client-Server-Systems enthält das wenigstens eine Exemplar zwei oder mehr Exemplare und die Serverrecheneinheit oder die Client-Recheneinheit ist dazu eingerichtet, die zwei oder mehr Exemplare abhängig von deren jeweiliger zeitlicher Entfernung zu sortieren. Die Client-Recheneinheit ist dazu eingerichtet, die Informationen betreffend das jeweilige Exemplar entsprechend der Sortierung anzuzeigen.

Die Sortierung abhängig von der zeitlichen Entfernung erlaubt es dem betrachtenden anfragenden Benutzer intuitiv besonders schnell zu erfassen, welche Exemplare für ihn am günstigsten gelegen sind.

Die Sortierung erfolgt dabei nicht notwendigerweise ausschließlich basierend auf der zeitlichen Entfernung. Beispielsweise kann eine mehrfache Sortierung vorgenommen werden. Weitere Sortierungskriterien können beispielsweise den Eigentümer oder Verleiher beziehungsweise Vermieter des Exemplars betreffen, einen in der Gerätedatenbank hinterlegten Zustand des jeweiligen Exemplars, ein Alter des Exemplars und so weiter.

Gemäß zumindest einer Ausführungsform des weiteren Client-Server-Systems ist die Serverrecheneinheit oder die Client-Recheneinheit dazu eingerichtet, abhängig von einem vorgegebenen Regelsatz eine Teilmenge der zwei oder mehr Exemplare auszuwählen und die Client-Recheneinheit ist dazu eingerichtet, die Informationen nur für die Exemplare der Teilmenge anzuzeigen.

Mit anderen Worten werden die zwei oder mehr Exemplare entsprechend dem vorgegebenen Regelsatz gefiltert und nur die gefilterten Exemplare werden angezeigt. So kann beispielsweise erreicht werden, dass nur Exemplare innerhalb einer bestimmten maximalen zeitlichen Entfernung und/oder nur Exemplare mit einem bestimmten vorgegebenen Zustand oder Alter und/oder nur Exemplare eines bestimmten Eigentümers und so weiter angezeigt werden. Dadurch kann insgesamt die Menge an angezeigten Informationen reduziert werden, sodass der anfragende Benutzer die relevanten Informationen schneller erfassen kann.

Gemäß zumindest einer Ausführungsform des weiteren Client-Server-Systems ist die Serverrecheneinheit oder die Client-Recheneinheit dazu eingerichtet, abhängig von deren jeweiliger zeitlicher Entfernung automatisch eines der zwei oder mehr Exemplare auszuwählen und die Client-Recheneinheit ist dazu eingerichtet, die Informationen nur für das ausgewählte Exemplar anzuzeigen.

Insbesondere kann die Client-Recheneinheit so nur das Exemplar mit der kürzesten zeitlichen Entfernung anzeigen. Dadurch kann die Anzahl angezeigter Informationen drastisch weiter reduziert werden, sodass eine besonders schnelle Erfassung durch den anfragenden Benutzer ermöglicht wird.

Gemäß zumindest einer Ausführungsform des weiteren Client-Server-Systems ist die Serverrecheneinheit dazu eingerichtet, für jedes des wenigstens einen Exemplars die jeweilige zeitliche Entfernung mit einem vorgegebenen Grenzwert zu vergleichen und ein Ergebnis des Vergleichs an die Client-Recheneinheit zu übermitteln. Die Client-Recheneinheit ist dazu eingerichtet, die Informationen betreffend das jeweilige Exemplar nur dann anzuzeigen, wenn die jeweilige zeitliche Entfernung kleiner oder gleich dem Grenzwert ist.

Beispielsweise kann die Serverrecheneinheit nur Informationen betreffend diejenigen Exemplare an die Client-Recheneinheit übermitteln, deren jeweilige zeitliche Entfernung kleiner oder gleich dem Grenzwert ist. Alternativ kann die Serverrecheneinheit die Informationen für alle identifizierten verfügbaren Exemplare übermitteln und die Client-Recheneinheit zur Anzeige diejenigen Exemplare auswählen, deren zeitliche Entfernung kleiner oder gleich dem Grenzwert ist.

Gemäß zumindest einer Ausführungsform des weiteren Client-Server-Systems ist die Client-Recheneinheit dazu eingerichtet, eine Benutzereingabe, welche ein Fortbewegungsmittel festlegt, zu erfassen. Die Serverrecheneinheit oder die Client-Recheneinheit ist dazu eingerichtet, die jeweilige zeitliche Entfernung abhängig von dem festgelegten Fortbewegungsmittel zu berechnen.

Gemäß zumindest einer Ausführungsform des weiteren Client-Server-Systems ist die Serverrecheneinheit oder die Client-Recheneinheit dazu eingerichtet, für jedes des wenigstens einen Exemplars basierend auf den Standortdaten und den jeweiligen Gerätestandortdaten eine Routenplanung für das festgelegte Fortbewegungsmittel durchzuführen und die jeweilige zeitliche Entfernung als Ergebnis der Routenplanung zu bestimmen.

Gemäß zumindest einer Ausführungsform des weiteren Client-Server-Systems speichert die Gerätedatenbank für jedes des wenigstens einen Exemplars Zustandsinformationen und/oder historische Nutzungsinformationen. Die Serverrecheneinheit ist dazu eingerichtet, die Zustandsinformationen und/oder die historischen Nutzungsinformationen an die Client-Recheneinheit zu übermitteln. Die Client-Recheneinheit ist dazu eingerichtet, die Informationen betreffend das jeweilige Exemplar abhängig von den Zustandsinformationen und/oder den historischen Nutzungsinformationen anzuzeigen.

Insbesondere kann die Client-Recheneinheit die anzuzeigenden Informationen anhand der Zustandsinformationen und/oder der historischen Nutzungsinformationen filtern und/oder sortieren.

Gemäß zumindest einer Ausführungsform des weiteren Client-Server-Systems beinhalten die Informationen betreffend das jeweilige Exemplar die Zustandsinformationen und/oder die historischen Nutzungsinformationen des jeweiligen Exemplars.

Gemäß einem vierten Aspekt des verbesserten Konzepts wird ein weiteres Verfahren zur Unterstützung der verteilten Nutzung von Elektrowerkzeugen angegeben. Gemäß dem weiteren Verfahren wird, insbesondere mittels einer Client-Recheneinheit, eine Anfrage zur beabsichtigten Nutzung eines Elektrowerkzeugs erfasst und an eine Serverrecheneinheit übermittelt, wobei die Anfrage Standortdaten betreffend einen anfragenden Benutzer enthält sowie Gerätedaten, welche einen Gerätetyp des Elektrowerkzeugs festlegen. Abhängig von den Gerätedaten wird mittels der Serverrecheneinheit wenigstens ein verfügbares Exemplar des Gerätetyps in einer Gerätedatenbank identifiziert und für jedes des wenigstens einen Exemplars werden zugehörige Gerätestandortdaten aus der Gerätedatenbank ausgelesen. Für jedes des wenigstens einen Exemplars wird abhängig von den Standortdaten und den jeweiligen Gerätestandortdaten eine zeitliche Entfernung berechnet, insbesondere mittels der Serverrecheneinheit oder der Client-Recheneinheit. Für jedes des wenigstens einen Exemplars werden Informationen betreffend das jeweilige Exemplar abhängig von der jeweiligen zeitlichen Entfernung auf einer Anzeigeeinheit angezeigt, insbesondere mittels der Client-Recheneinheit.

Weitere Ausführungsformen des weiteren Verfahrens nach dem vierten Aspekt des verbesserten Konzepts folgen direkt aus den verschiedenen Ausgestaltungsformen des weiteren Client-Server-Systems nach dem dritten Aspekt des verbesserten Konzepts und umgekehrt. Insbesondere kann ein weiteres Client-Server-System nach dem verbesserten Konzept dazu eingerichtet oder programmiert sein, ein weiteres Verfahren nach dem verbesserten Konzept durchzuführen oder es führt ein solches Verfahren durch.

Ausführungsformen des Verfahrens nach dem ersten Aspekt des verbesserten Konzepts und des weiteren Verfahrens nach dem vierten Aspekt des verbesserten Konzepts können auch kombiniert werden. Dabei kann die erste Recheneinheit des ersten elektronischen Endgeräts, wie sie bezüglich des Verfahrens nach dem ersten Aspekt beschrieben wurden, beispielsweise die Clientrecheneinheit gemäß dem weiteren Verfahren nach dem vierten Aspekt darstellen. Entsprechendes gilt für das Client-Server-System nach dem ersten Aspekt und das weitere Client-Server-System nach dem dritten Aspekt des verbesserten Konzepts.

Sämtliche Ausführungsformen der Verfahren und Client-Server-Systeme nach den verschiedenen Aspekten des verbesserten Konzepts lassen sich auf entsprechende Verfahren und Client-Server-Systeme übertragen, bei denen die Nutzung eines Akkus für ein Elektrowerkzeug an die Stelle der Nutzung des Elektrowerkzeugs tritt. Insbesondere resultieren daraus entsprechende Ausführungsformen eines Verfahrens zur Nutzung eines Elektrowerkzeugs und/oder eines Akkus für das Elektrowerkzeug, eines weiteren Verfahrens zur Unterstützung der verteilten Nutzung von Elektrowerkzeugen und/oder von Akkus der Elektrowerkzeuge, eines Client-Server-Systems zur Unterstützung der Nutzung eines Elektrowerkzeugs und/oder eines Akkus für das Elektrowerkzeug und eines weiteren Client-Server-Systems zur Unterstützung der verteilten Nutzung von Elektrowerkzeugen und/oder von Akkus für die Elektrowerkzeuge. Auch solche Ausführungsformen sind von dem verbesserten Konzept erfasst.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

In den Figuren zeigen:
- Fig. 1: eine schematische Darstellung einer beispielhaften eines Client-Server-Systems nach dem verbesserten Konzept; und
- Fig. 2: ein Ablaufdiagramm einer beispielhaften Ausführungsform eines Verfahrens nach dem verbesserten Konzept.

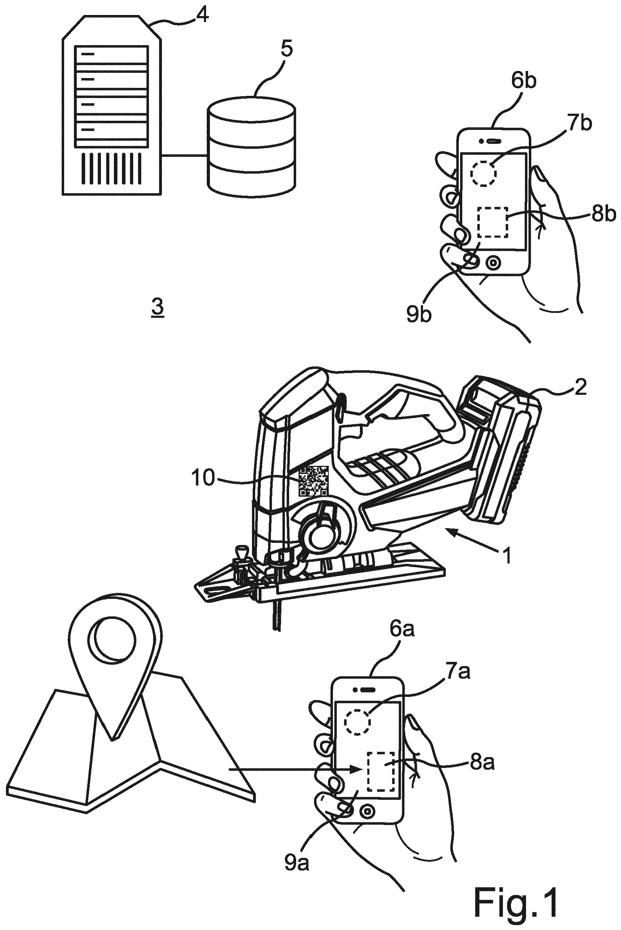

Fig. 1 zeigt schematisch eine beispielhafte Ausführungsform eines Client-Server-Systems 3 nach dem verbesserten Konzept. Das Client-Server-System 3 kann dabei sowohl ein Client-Server-System 3 nach dem zweiten Aspekt des verbesserten Konzepts als auch ein Client-Server-System 3 nach dem dritten Aspekt des verbesserten Konzepts darstellen.

Das Client-Server-System 3 beinhaltet eine Serverrecheneinheit 4, beispielsweise eine Cloud-Recheneinheit, mit einem Speicherelement 5 sowie ein erstes elektronisches Endgerät 6a, beispielsweise ein Smartphone, und ein zweites elektronisches Endgerät 6b, beispielsweise ein Smartphone. Jedes der Endgeräte 6a, 6b beinhaltet eine Recheneinheit 8a, 8b, die auch als jeweilige Client-Recheneinheit bezeichnet werden kann. Die Recheneinheiten 8a, 8b können jeweils über eine Funkschnittstelle mit der Serverrecheneinheit 4 kommunizieren und Daten austauschen. Außerdem weist jedes der Endgeräte 6a, 6b ein entsprechendes Sensorsystem 7a, 7b auf, beispielsweise eine jeweilige Kamera. Die Endgeräte 6a, 6b weisen auch jeweils eine Anzeigeeinheit 9a, 9b auf, beispielsweise ein Display oder einen Bildschirm.

Fig. 1 zeigt außerdem ein Elektrowerkzeug 1, beispielhaft als Stichsäge dargestellt, mit einem Akku 2. Außen an einem Gehäuse des Elektrowerkzeugs 1 ist ein zweidimensionaler Datenmatrixcode 10 angebracht, der beispielsweise eine Seriennummer oder einen sonstigen Identifikator des konkreten Exemplars des Elektrowerkzeugs 1 speichert.

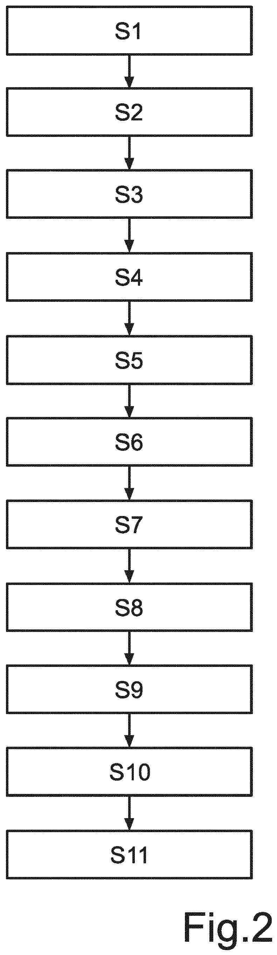

Die Funktionsweise des Client-Server-Systems wird im Folgenden anhand eines Verfahrens nur Nutzung eines Elektrowerkzeugs nach dem verbesserten Konzept näher erläutert, insbesondere unter Bezugnahme auf das Ablaufdiagramm eines solchen Verfahrens, wie es in Fig. 2 schematisch gezeigt ist. Das Verfahren kann dabei sowohl ein Verfahren nach dem ersten Aspekt des verbesserten Konzepts als auch ein Verfahren nach dem vierten Aspekt des verbesserten Konzepts beinhalten oder darstellen. Insbesondere können die Schritte S1 bis S4 können als Teil eines weiteren Verfahrens nach dem vierten Aspekt des verbesserten Konzepts angesehen werden und die Schritte S5 bis S11 als Teil eines Verfahrens nach dem ersten Aspekt des verbesserten Konzepts.

In Schritt S1 gibt ein erster Benutzer mittels des ersten elektronischen Endgeräts 6a eine Anfrage zur beabsichtigten Nutzung eines Elektrowerkzeugs 1 ein, beispielsweise mittels einer auf dem Endgerät 6a installierten Softwareapplikation. Der erste Benutzer kann dabei seine Standortdaten angeben oder das Endgerät 6a kann seine aktuellen Standortdaten basierend auf GPS-Informationen bestimmen. Zusammen mit der Anfrage werden die Standortdaten mittels der ersten Recheneinheit 8a an die Serverrecheneinheit 4 übermittelt. Außerdem übermittelt die erste Recheneinheit 8a Gerätedaten, die einen Gerätetyp des gewünschten Elektrowerkzeugs 1 festlegen, an die Serverrecheneinheit 4.

In Schritt S2 führt die Serverrecheneinheit 4 eine Datenbankabfrage einer Gerätedatenbank durch, die auf dem Speicherelement 5 gespeichert ist. Die Gerätedatenbank speichert dabei für eine Vielzahl von Elektrowerkzeugen verschiedenen Typs, ob entsprechende Exemplare derzeit verfügbar sind und insbesondere zugehörige Gerätestandortdaten für jedes der Exemplare. Beispielsweise kann die Gerätedatenbank auch weitere Informationen betreffend die einzelnen Exemplare beziehungsweise deren Eigentümer speichern, etwa Zustandsinformationen oder historische Nutzungsinformationen des Exemplars oder Bewertungen oder Beurteilungen früherer Benutzer bezüglich des Exemplars oder des Eigentümers des Exemplars. Im Rahmen der Datenbankabfrage identifiziert die Serverrecheneinheit 4 eines oder mehrere verfügbare Exemplare des gewünschten Gerätetyps und liest die zugehörigen Gerätestandortdaten aus der Gerätedatenbank aus.

In Schritt S3 berechnet die Serverrecheneinheit 4 für jedes so identifizierte Exemplar abhängig von den Standortdaten und den jeweiligen Gerätestandortdaten eine entsprechende zeitliche Entfernung, also eine Zeitdauer, die näherungsweise benötigt wird, um, insbesondere mit einem vordefinierten oder mittels der Anfrage übermittelten Fortbewegungsmittel, von dem Standort des ersten Benutzers zu dem Gerätestandort des jeweiligen Exemplars zu gelangen. Die Serverrecheneinheit 4 übermittelt Informationen betreffend die verfügbaren Exemplare sowie die jeweilige berechnete zeitliche Entfernung an das erste Endgerät 6a beziehungsweise die erste Recheneinheit 8a.

Im Schritt S4 zeigt die erste Recheneinheit 8a die Informationen betreffend die verfügbaren Exemplare abhängig von deren jeweiliger zeitlicher Entfernung auf der ersten Anzeigeeinheit 9a an.

Dazu kann die erste Recheneinheit 8a beispielsweise die verfügbaren Exemplare entsprechend deren zeitlicher Entfernung sortieren und derart anzeigen, dass die Exemplare bezüglich der zeitlichen Entfernung aufsteigend angezeigt werden. So wird es dem ersten Benutzer ermöglicht, möglichst schnell die für ihn relevantesten Suchergebnisse zu erfassen und entsprechend auszuwählen.

Die erste Recheneinheit 8a kann beispielsweise auch einen vorgegebenen Regelsatz berücksichtigen, um eine Teilmenge der verfügbaren Exemplare auszuwählen und nur diese anzuzeigen oder um eine Mehrfachsortierung der verfügbaren Exemplare durchzuführen. So können beispielsweise verfügbare Exemplare favorisierter Verleiher oder Vermieter bevorzugt angezeigt werden.

Der erste Benutzer kann sich nun zu den Gerätestandort eines der Exemplare des Elektrowerkzeugs 1 begeben. In Schritt S5 wird der erste Benutzer mittels der Serverrecheneinheit 4 und der ersten Recheneinheit 8a authentifiziert. Danach erfasst der erste Benutzer im Schritt S6 die Geräteidentifikationsdaten des Elektrowerkzeugs 1, indem er den Datenmatrixcode 10 mit dem ersten Sensorsystem 7a des ersten Endgeräts 6a scannt. In Schritt S7 werden die so erfassten Geräteidentifikationsdaten mittels der ersten Recheneinheit 8a an die Serverrecheneinheit 4 übermittelt.

In Schritt S8 wird ein zweiter Benutzer, insbesondere der Eigentümer, Verleiher oder Vermieter des entsprechenden Exemplars des Elektrowerkzeugs, mittels des zweiten elektronischen Endgeräts 6b, insbesondere mittels der zweiten Recheneinheit 8b, und der Serverrecheneinheit 4 authentifiziert, um zweite Benutzeridentifikationsdaten zu bestimmen. In Schritt S9 erfasst der zweite Benutzer nach der Authentifizierung des zweiten Benutzers die Geräteidentifikationsdaten des Elektrowerkzeugs 1 erneut, indem er mittels des zweiten Sensorsystems 7b ebenfalls den Datenmatrixcode 10 scannt. In Schritt S9 übermittelt die zweite Recheneinheit 8b die so erfassten Geräteidentifikationsdaten an die Serverrecheneinheit 4.

In Schritt S11 prüft die Serverrecheneinheit 4, ob die so übermittelten Geräteidentifikationsdaten übereinstimmen, ob also beide Benutzer den Datenmatrixcode 10 desselben Elektrowerkzeugs 1 gescannt haben. Ist dies der Fall, so dokumentiert die Serverrecheneinheit 4 in der Gerätedatenbank die Übergabe des Exemplars des Elektrowerkzeugs 1 von dem zweiten Benutzer an den ersten Benutzer.

Anstelle des Datenmatrixcodes 10 können in verschiedenen Ausgestaltungsformen auch andere visuelle Codes, beispielsweise Strichcodes, eingesetzt werden oder es kann ein RFID-Transponder in oder an dem Elektrowerkzeug 1 vorgesehen sein, der die Geräteidentifikationsdaten speichert. In diesem Fall sind die Sensorsysteme 7a, 7b beispielsweise als RFID-Lesegeräte ausgestaltet.

Möchte der erste Benutzer das Elektrowerkzeug 1 zurückgeben, so können die bezüglich S5 bis S11 beschriebenen Schritte in umgekehrter Reihenfolge durchgeführt werden, um die entsprechende Rückgabe des Elektrowerkzeugs 1 ebenfalls in der Gerätedatenbank zu dokumentieren.

Wie beschrieben werden durch das verbesserte Konzept Verfahren und Systeme angegeben, mit welchen die geteilte Nutzung von Elektrowerkzeugen vereinfacht werden und sicherer ausgestaltet werden kann. Durch die sichere Dokumentation der Übergabe und Rückgabe des Elektrowerkzeugs wird verhindert, dass Mängel aus früheren Zeiträumen einem späteren Entleiher oder Mieter angelastet werden.

Neben der Dokumentation des reinen Gefahrenübergangs können in verschiedenen Ausgestaltungsformen auch zusätzliche Informationen erfasst und in der Gerätedatenbank gespeichert werden, beispielsweise, wie lange das Elektrowerkzeug verliehen wurde, wie viele Ladezyklen des Akkus während der Verleihzeit durchgeführt wurden, wie viel elektrische Energie verbraucht wurde und so weiter. Auch der funktionale und optische Zustand des Geräts beziehungsweise Beschädigungen des Geräts können auf diese Art gleichzeitig dokumentiert werden.

Das System beziehungsweise das Verfahren erlaubt es in verschiedenen Ausgestaltungsformen auch, in vorteilhafter Weise einen Versicherungsschutz für das Elektrowerkzeug abzubilden. Liegen etwa Beschädigungen oder Defekte vor, so können diese erfasst und in der Gerätedatenbank gespeichert werden. Die Beschädigungen oder Defekte können auch klassifiziert werden und/oder es kann ihnen ein entsprechender Wertverlust zugeordnet werden. Bei Bedarf können auch Dritte eingebunden werden, um die Beschädigungen und Defekte zu reparieren und/oder zur Wartung, um so den Werterhalt des Elektrowerkzeugs sicherzustellen.

Durch das verbesserte Konzept kann der Schutz des Verleihers oder Vermieters vor oder bei Diebstahl oder unsachgemäßer Behandlung des Elektrowerkzeugs verbessert werden. Es kann auch eine gegenseitige Bewertung oder Beurteilung von Verleiher und Entleiher vorgesehen sein, sodass der Verleiher insbesondere die Möglichkeit hat, vor der Übergabe des Elektrowerkzeugs die entsprechende Bewertung des Entleihers zu überprüfen und gegebenenfalls einen Verleih abzulehnen.

### BEZUGSZEICHENLISTE:

- 1: Elektrowerkzeug
- 2: Akku
- 3: Client-Server-System
- 4: Serverrecheneinheit
- 5: Speicherelement
- 6a, 6b: elektronische Endgeräte
- 7a, 7b: Sensorsysteme
- 8a, 8b: Recheneinheiten
- 9a, 9b: Anzeigeeinheiten
- 10: Datenmatrixcode
- S1 bis S11: Verfahrensschritte

## Patentansprüche

1. Verfahren zur Nutzung eines Elektrowerkzeugs (1), wobei
- ein erster Benutzer authentifiziert wird, um erste Benutzeridentifikationsdaten zu bestimmen;
- zu einem ersten Zeitpunkt nach der Authentifizierung des ersten Benutzers Geräteidentifikationsdaten des Elektrowerkzeugs (1) mittels eines ersten Sensorsystems (7a, 7b) eines ersten elektronischen Endgeräts (6a, 6b) erfasst werden;
- von den zum ersten Zeitpunkt erfassten Geräteidentifikationsdaten abhängige erste Geräteinformationen an eine Serverrecheneinheit (4) übermittelt werden;
- ein zweiter Benutzer authentifiziert wird, um zweite Benutzeridentifikationsdaten zu bestimmen;
- zu einem zweiten Zeitpunkt nach der Authentifizierung des zweiten Benutzers die Geräteidentifikationsdaten des Elektrowerkzeugs (1) mittels des ersten Sensorsystems (7a, 7b) oder mittels eines zweiten Sensorsystems (7a, 7b) eines zweiten elektronischen Endgeräts (6a, 6b) erfasst werden;
- von den zum zweiten Zeitpunkt erfassten Geräteidentifikationsdaten abhängige zweite Geräteinformationen an die Serverrecheneinheit (4) übermittelt werden; und
- mittels der Serverrecheneinheit (4) Übergabeinformationen abhängig von den ersten Geräteinformationen, den zweiten Geräteinformationen, den ersten Benutzeridentifikationsdaten und den zweiten Benutzeridentifikationsdaten erzeugt und gespeichert werden.

2. Verfahren nach Anspruch 1, wobei
- die ersten Geräteinformationen und die zweiten Geräteinformationen mittels der Serverrecheneinheit (4) miteinander verglichen werden; und
- die Übergabeinformationen abhängig von einem Ergebnis des Vergleichs erzeugt werden.

3. Verfahren nach einem der vorhergehenden Ansprüche, wobei
- die Geräteidentifikationsdaten zum ersten Zeitpunkt mittels einer ersten Kamera des ersten Sensorsystems (7a, 7b) erfasst werden; und/oder
- die Geräteidentifikationsdaten zum zweiten Zeitpunkt mittels der ersten Kamera oder mittels einer zweiten Kamera des zweiten Sensorsystems (7a, 7b) erfasst werden.

4. Verfahren nach einem der vorhergehenden Ansprüche, wobei die Geräteidentifikationsdaten in Form eines zweidimensionalen Datenmatrixcodes (10) erfasst werden.

5. Verfahren nach einem der Ansprüche 1 oder 2, wobei
- die Geräteidentifikationsdaten zum ersten Zeitpunkt mittels einer ersten RFID-Schnittstelle des ersten Sensorsystems (7a, 7b) erfasst werden; und/oder
- die Geräteidentifikationsdaten zum zweiten Zeitpunkt mittels der ersten RFID-Schnittstelle oder mittels einer zweiten RFID-Schnittstelle des zweiten Sensorsystems (7a, 7b) erfasst werden.

6. Verfahren nach einem der Ansprüche 1 oder 2, wobei
- die Geräteidentifikationsdaten zum ersten Zeitpunkt mittels einer ersten Bluetooth-Schnittstelle des ersten Sensorsystems (7a, 7b), einer ersten Wifi-Schnittstelle des ersten Sensorsystems (7a, 7b) oder einer sonstigen ersten Funk-Schnittstelle des ersten Sensorsystems (7a, 7b) erfasst werden; und/oder
- die Geräteidentifikationsdaten zum zweiten Zeitpunkt mittels der ersten Bluetooth-Schnittstelle, der ersten Wifi-Schnittstelle oder der sonstigen ersten Funk-Schnittstelle oder mittels einer zweiten Bluetooth-Schnittstelle des zweiten Sensorsystems (7a, 7b), einer zweiten Wifi-Schnittstelle des zweiten Sensorsystems (7a, 7b) oder einer sonstigen zweiten Funk-Schnittstelle des zweiten Sensorsystems (7a, 7b) erfasst werden.

7. Verfahren nach einem der vorhergehenden Ansprüche, wobei
- der zweite Benutzer erneut authentifiziert wird, um erneut die zweiten Benutzeridentifikationsdaten zu bestimmen;
- zu einem dritten Zeitpunkt nach der erneuten Authentifizierung des zweiten Benutzers die Geräteidentifikationsdaten des Elektrowerkzeugs (1) mittels des ersten Sensorsystems (7a, 7b) oder mittels des zweiten Sensorsystems (7a, 7b) erfasst werden;
- von den zum dritten Zeitpunkt erfassten Geräteidentifikationsdaten abhängige dritte Geräteinformationen an die Serverrecheneinheit (4) übermittelt werden;
- der erste Benutzer erneut authentifiziert wird, um erneut die ersten Benutzeridentifikationsdaten zu bestimmen;
- zu einem vierten Zeitpunkt nach der erneuten Authentifizierung des ersten Benutzers die Geräteidentifikationsdaten des Elektrowerkzeugs (1) mittels des ersten Sensorsystems (7a, 7b) erfasst werden;
- von den zum vierten Zeitpunkt erfassten Geräteidentifikationsdaten abhängige vierte Geräteinformationen an die Serverrecheneinheit (4) übermittelt werden; und
- mittels der Serverrecheneinheit (4) Rückgabeinformationen abhängig von den dritten Geräteinformationen und vierten Geräteinformationen erzeugt und gespeichert werden.

8. Verfahren nach einem der vorhergehenden Ansprüche, wobei
- automatisch ein Zeitraum seit dem ersten Zeitpunkt oder seit dem zweiten Zeitpunkt bestimmt und mit einem vorgegebenen Grenzwert verglichen wird;
- mittels des ersten elektronischen Endgeräts (6a, 6b) und/oder mittels des zweiten elektronischen Endgeräts (6a, 6b) abhängig von einem Ergebnis des Vergleichs ein Warnhinweis ausgegeben wird.

9. Verfahren nach einem der vorhergehenden Ansprüche, wobei mittels des Elektrowerkzeugs (1) Nutzungsdaten betreffend eine Nutzung des Elektrowerkzeugs (1) nach dem ersten Zeitpunkt oder nach dem zweiten Zeitpunkt bestimmt werden und an die Serverrecheneinheit (4) übermittelt werden.

10. Verfahren nach Anspruch 9, wobei
- die Nutzungsdaten abhängig von einer durch das Elektrowerkzeug (1) verbrauchten Menge an elektrischer Energie bestimmt werden; und/oder
- die Nutzungsdaten abhängig von einer aktiven Nutzungsdauer des Elektrowerkzeugs (1) bestimmt werden; und/oder
- die Nutzungsdaten abhängig von einer Anzahl von Ladezyklen eines Akkus (2) des Elektrowerkzeugs (1) bestimmt werden.

11. Client-Server-System zur Unterstützung der Nutzung eines Elektrowerkzeugs (1), das Client-Server-System (3) aufweisend ein erstes elektronisches Endgerät (6a, 6b) als ersten Client, ein zweites elektronisches Endgerät (6a, 6b) als zweiten Client und eine Serverrecheneinheit (4), wobei
- das erste elektronische Endgerät (6a, 6b) eine erste Benutzerschnittstelle zum Erfassen einer ersten Benutzereingabe aufweist sowie eine erste Recheneinheit (8a, 8b), die dazu eingerichtet ist, einen ersten Benutzer abhängig von der ersten Benutzereingabe zu authentifizieren;
- das erste elektronische Endgerät (6a, 6b) ein erstes Sensorsystem (7a, 7b) aufweist, das dazu eingerichtet ist, zu einem ersten Zeitpunkt nach der Authentifizierung des ersten Benutzers Geräteidentifikationsdaten des Elektrowerkzeugs (1) zu erfassen;
- die erste Recheneinheit (8a, 8b) dazu eingerichtet ist, von den zum ersten Zeitpunkt erfassten Geräteidentifikationsdaten abhängige erste Geräteinformationen an die Serverrecheneinheit (4) zu übermitteln;
- das zweite elektronische Endgerät (6a, 6b) eine zweite Benutzerschnittstelle zum Erfassen einer zweiten Benutzereingabe aufweist sowie eine zweite Recheneinheit (8a, 8b), die dazu eingerichtet ist, einen zweiten Benutzer abhängig von der zweiten Benutzereingabe zu authentifizieren;
- das zweite elektronische Endgerät (6a, 6b) ein zweites Sensorsystem (7a, 7b) aufweist, das dazu eingerichtet ist, zu einem zweiten Zeitpunkt nach der Authentifizierung des zweiten Benutzers die Geräteidentifikationsdaten des Elektrowerkzeugs (1) zu erfassen;
- die zweite Recheneinheit (8a, 8b) dazu eingerichtet ist, von den zum zweiten Zeitpunkt erfassten Geräteidentifikationsdaten abhängige zweite Geräteinformationen an die Serverrecheneinheit (4) zu übermitteln; und
- die Serverrecheneinheit (4) dazu eingerichtet ist, Übergabeinformationen abhängig von den ersten Geräteinformationen, den zweiten Geräteinformationen, den ersten Benutzeridentifikationsdaten und den zweiten Benutzeridentifikationsdaten zu erzeugen und zu speichern.

12. Client-Server-System nach Anspruch 10, wobei
- das erste Sensorsystem (7a, 7b) eine erste Kamera, eine erste RFID-Schnittstelle, eine erste Bluetooth-Schnittstelle, eine erste Wifi-Schnittstelle oder eine sonstige erste Funkschnittstelle enthält; und/oder
- das zweite Sensorsystem (7a, 7b) eine zweite Kamera, eine zweite RFID-Schnittstelle eine zweite Bluetooth-Schnittstelle, eine zweite Wifi-Schnittstelle oder eine sonstige zweite Funkschnittstelle enthält.

13. Client-Server-System nach einem der Ansprüche 11 oder 12, wobei das Client-Server-System (3) das Elektrowerkzeug (1) beinhaltet und das Elektrowerkzeug (1) ein Batteriemanagementsystem für einen Akku (2) des Elektrowerkzeugs (1) aufweist, das dazu eingerichtet ist, Nutzungsdaten betreffend eine Nutzung des Elektrowerkzeugs (1) nach dem ersten Zeitpunkt oder nach dem zweiten Zeitpunkt zu bestimmen.

14. Client-Server-System nach Anspruch 13, wobei das Elektrowerkzeug (1) eine Kommunikationsschnittstelle aufweist und das Batteriemanagementsystem dazu eingerichtet ist, die Nutzungsdaten über die Kommunikationsschnittstelle an die Serverrecheneinheit (4) zu übermitteln.

15. Client-Server-System nach Anspruch 13, wobei
- das Elektrowerkzeug (1) eine Kommunikationsschnittstelle aufweist; und
- das Batteriemanagementsystem dazu eingerichtet ist, die Nutzungsdaten über die Kommunikationsschnittstelle an die erste Recheneinheit (8a, 8b) zu übermitteln; und
- die erste Recheneinheit (8a, 8b) dazu eingerichtet ist, die Nutzungsdaten an die Serverrecheneinheit (4) zu übermitteln; und/oder
- das Elektrowerkzeug (1) die Kommunikationsschnittstelle aufweist; und
- das Batteriemanagementsystem dazu eingerichtet ist, die Nutzungsdaten über die Kommunikationsschnittstelle an die zweite Recheneinheit (8a, 8b) zu übermitteln; und
- die zweite Recheneinheit (8a, 8b) dazu eingerichtet ist, die Nutzungsdaten an die Serverrecheneinheit (4) zu übermitteln.
